# EUROPÄISCHE PATENTSCHRIFT

(11) **EP 2 465 096 B1**
(45) Veröffentlichungstag und Bekanntmachung des Hinweises auf die Patenterteilung: **21.02.2018**
(21) Anmeldenummer: 10747787.9
(22) Anmeldetag: 11.08.2010
(51) Int. Cl.: G06T 15/08, G06T 17/20

(54) **VERFAHREN UND VORRICHTUNG ZUR VERARBEITUNG VON 3D-BILDDATEN EINES SCHÄDELS**
METHOD AND DEVICE FOR PROCESSING 3-D IMAGE DATA OF A SKULL
PROCÉDÉ ET DISPOSITIF DE TRAITMENT DE DONNÉES IMAGE 3D D'UN CRÂNE

(30) Priorität: 11.08.2009 AT 12632009
(43) Veröffentlichungstag der Anmeldung: 20.06.2012
(73) Patentinhaber: Siemens Healthcare GmbH, 91052 Erlangen (DE)
(72) Erfinder: Ringl, Helmut, 2320 Schwechat (AT)
(86) Internationale Anmeldenummer: PCT/AT2010/000295
(87) Internationale Veröffentlichungsnummer: WO 2011/017730

(56) Entgegenhaltungen:
- DE-A1- 10 254 908
- DE-T5-112004 001 440
- US-A1- 2005 018 888
- US-B1- 6 181 348
- ROBB R A ET AL: "INTERACTIVE DISPLAY AND ANALYSIS OF 3-D MEDICAL IMAGES", IEEE TRANSACTIONS ON MEDICAL IMAGING, IEEE SERVICE CENTER, PISCATAWAY, NJ, US, Bd. 8, Nr. 3, 1. September 1989 (1989-09-01), Seiten 217-226, XP000053813, ISSN: 0278-0062, DOI: 10.1109/42.34710

## Beschreibung

Die Erfindung betrifft ein Verfahren und eine Vorrichtung zur Verarbeitung von 3D-Bilddaten eines Schädels, wobei Bilddaten aus den 3D-Bilddaten ausgewählt bzw. berechnet und als 2D-Bilddaten in einer Ebene dargestellt werden, aus den 3D-Bilddaten die Schädeloberfläche ermittelt wird, und die entsprechenden Bilddaten in einem definierten Abstand zur Schädeloberfläche ermittelt und als 2D-Bilddaten in einer Ebene dargestellt werden.

Es gibt eine Reihe von bildgebenden Verfahren, welche zur Darstellung eines menschlichen oder tierischen Schädels verwendet werden, wie z.B. Computertomographie-Verfahren, Magnetresonanztomographie-Verfahren, Positronenemissionstomographie-Verfahren oder dgl.. Mit derartigen bildgebenden Verfahren wird eine Vielzahl an 3D-Bilddaten mit extrem hohem Informationsgehalt geschaffen, von welchen der behandelnde Arzt je nach Zweck der Diagnose oder Therapie eine gewünschte Teilmenge entsprechend verarbeitet und in zweidimensionaler Form als 2D-Bilddaten darstellt. Die Vielzahl an 3D-Bilddaten macht daher eine Diagnose für den behandelnden Arzt sehr kompliziert und zeitaufwändig. Die vorliegende Erfindung ist auf Verfahren zur Verarbeitung der Bilddaten menschlicher oder tierischer Schädel gerichtet, welche eine raschere Diagnose des behandelnden Arztes bzw. Personals zulassen.

Insbesondere bei unfallbedingten Schädelverletzungen oder Infarkten ist eine rasche Diagnose zur Ermöglichung einer raschen medizinischen Intervention wesentlich. Die unfallbedingte Schädelverletzung ist in der westlichen Welt einer der häufigsten Gründe für körperliche und geistige Behinderung als auch Tod. Man schätzt, dass in den Vereinigten Staaten von Amerika zumindest 1,5 Millionen Menschen pro Jahr eine Schädelverletzung erleiden. Von diesen sterben etwa 51.000 pro Jahr, 290.000 werden im Spital aufgenommen und 1,2 Millionen Menschen werden behandelt und dann von der Notfallabteilung entlassen.

In Abhängigkeit von der klinischen Präsentation des Patienten und der Anamnese erhält ein beträchtlicher Teil dieser Patienten eine Computertomographie. Die Computertomographie hat sich zum Referenzstandard zur Abklärung einer suspizierten Schädelverletzung entwickelt und ermöglicht eine schnelle Darstellung und Abklärung des Verletzungsmusters und möglicher Komplikationen innerhalb des Schädels.

Während die Diagnose einer Blutung innerhalb des Schädels, die unfallbedingte direkte Schädigung des Gehirns, und der Unfallassoziierte Infarkt die wichtigsten klinischen Fragestellungen sind, welche mittels der Computertomographie beantwortet werden können, ist die Fragestellung nach Frakturen in der Schädeldecke als auch in der Schädelbasis die zweitwichtigste. Frakturen der Schädelkalotte als auch der Schädelbasis können folgende Komplikationen beinhalten: Liquorfistel, neurovaskuläre Schäden, Hirnhautentzündung, Gesichtslähmung, Taubheit, Gefäßzerreißung beziehungsweise Dissektion und Shuntbildungen zwischen Arterien und Venen. Frakturen dienen in der regulären Befundung zusätzlich als Hinweis auf eine naheliegende assoziierte Verletzung, wie z.B. Blutungen. Zusätzlich können Frakturen auch später zu Komplikationen, insbesondere Blutungen, führen, auch wenn ursprünglich noch keine Blutung vorhanden war. Weiters kann das Vorhandensein von Frakturen abhängig vom jeweiligen Fall auch mögliche Auswirkungen im juristischen und forensischen Sektor haben, beispielsweise wenn Fremdverschulden vorliegt, da zur Erzeugung einer Schädelfraktur ein gewisses Mindestmaß an Gewalt notwendig ist. Die neueste Generation von Multidetektor-Computertomographen bietet eine ständig anwachsende räumliche Auflösung entlang der craniocaudalen Achse des Patienten mit einer proportional dazu anwachsenden Zahl an axialen Bildern. Diese Verbesserung bietet neue Möglichkeiten zur Einsicht in anatomische und pathologische Strukturen, die für die Befundung auch berücksichtigt werden müssen. In der klinischen Routine werden diese Bilder primär in der axialen Ebene (in der Aufnahmeebene) befundet. Im Regelfall wird die Auflösung, welche das Bildaufnahmegerät anbieten kann, nicht ausgenutzt, und zum Zwecke der Praktikabilität werden dickere Schichten berechnet als das Gerät bieten könnte. Die Maximalzahl der Bilder, die bei einer Computertomographie des Schädels mit modernen Scannern untersucht werden, beträgt über 500 Bilder in einer Ebene, wenn alleine die Knochenstruktur untersucht wird und die Weichteile noch außer Acht gelassen werden. Bis dato werden dreidimensionale Rekonstruktionen des Schädels und der Schädelbasis nur in Ausnahmefällen angefertigt, wenn bei der ursprünglichen Befundung der axialen Bilder Unklarheiten bestehen oder ein komplexer Verletzungsmechanismus vorliegt, der anhand der axialen Bilder durch den befundenden Radiologen nicht eindeutig erklärbar ist. Die Anzahl der Bilder und die komplexe anatomische Situation der Schädelkalotte und Schädelbasis lassen jedoch die Vermutung zu, dass hierbei kleinere Frakturen übersehen werden können.

Zusätzliche dreidimensionale Rekonstruktionen der Schädelkalotte und der Schädelbasis können dem Radiologen helfen, die Detektionsrate der Frakturen erheblich zu erhöhen. In der heutigen Praxis ist dies jedoch nur in Spezialfällen üblich, da 3D-Rekonstruktionen zusätzliche Zeit der Röntgenassistenten und/oder des Radiologen verlangen und natürlich auch die Beurteilung dieser 3D-Rekonstruktionen zeitintensiv ist. Weiters existiert kein Standard und keine Evidenz, welche der vorhandenen 3D-Rekonstruktionen am besten dafür geeignet ist. Derzeit gibt es nur Methoden, die mehrere Ansichten der Schädelkalotte generieren, so dass viele zusätzliche 3D-Bilder beurteilt werden müssen, was wiederum zeitkritisch ist.

Bis jetzt haben mehrere Studien dreidimensionale Rekonstruktionen des Gesichtsschädels erforscht und sich mit dreidimensionalen Rekonstruktionen der Schädelbasis befasst. Es existiert keine Literatur, die sich ausschließlich mit der Detektion von Schädelkalottenfrakturen anhand von Computertomographie-Aufnahmen befasst. Die verwendeten 3D-Algorithmen für die oben zitierten Studien beinhalten Surfaced Shading Display (SSD) und Volume Rendering (VR) und benötigen zur exakten Ansicht und Veränderung entsprechend leistungsfähige Workstations und im Regelfall auch die Erstellung einer Filmsequenz, in der sich der Schädel um verschiedene Achsen dreht und so von verschiedenen Seiten betrachtet werden kann. Der Nachteil ist wiederum der dafür erforderliche Zeitaufwand und die Anzahl der Bilder, die für einen solchen Film generiert werden muss.

Die US 6,181,348 B1 zeigt ein Verfahren zur Verarbeitung von Bilddaten beispielsweise eines Schädels, mit dem ein einfaches Segmentieren der Schädeloberfläche durch Polygone und Projektion der Volumensinformation auf die Polygone vorgenommen wird.

Aus dem Artikel von R. A. Robb et al.:, "Interactive Display and Analysis of 3-D Medical Images" (IEEE Transactions on Medical Imaging, IEEE Service Center, Piscataway NJ, US, vol., 8, no. 3, 1 September 1989, pages 217-226) ist ein Verfahren bekanntgeworden, bei dem Volumeninformation parallel zu einer segmentierten Oberfläche abgegriffen wird.

Die DE 10 254 908 A1 beschreibt ein Verfahren zur Bildverarbeitung bei dem die Oberfläche eines dreidimensionalen Abbildes eines Objekts segmentiert und in eine Ebene transformiert wird. Es werden dabei Schnitte des Körpers in einer Ebene dargestellt nicht aber die Oberfläche eines dreidimensionalen Objekts insbesondere eines Schädels.

Die US 2005/0018888 A1 bezieht sich auf ein Verfahren mit dem die Oberfläche der Wand eines Hohlorgans rekonstruiert werden kann. Als Anwendungen kommen Darstellungen von Hohlorganen, wie z.B. dem Darm, zur Visualisierung von Polypen oder von Gefäßveränderungen in Frage. Die Ermittlung der Schädeloberfläche aus dem 3D-Bild Daten eines Schädels wird in diesem Dokument nicht beschrieben.

Schließlich zeigt die DE 112 004 001 440 T5 ein Verfahren zum Entfalten eines Organs, beispielsweise des Herzens, bei dem die äußere Oberfläche des Organs ermittelt und dargestellt wird. Dabei erfolgt eine Segmentierung der Oberfläche, welche als Projektionsfläche verwendet wird.

Die US 2004/0264753 A1 beschreibt ein Verfahren und eine Einrichtung zur Verarbeitung von CT-Bilddaten des Darms, wobei die 3D-Bilddaten der inneren Oberfläche des Darm in 2D-Bilddaten aufgefaltet werden.

Die WO 02/093495 A1 zeigt ein Verfahren zur Verarbeitung von 3D-Bilddaten innerer Organe, wobei die 3D-Bilddaten als 2D-Bilddaten in einer Ebene dargestellt werden.

Die Aufgabe der vorliegenden Erfindung besteht daher in der Schaffung eines oben genannten Verfahrens und einer oben genannten Vorrichtung zur Verarbeitung der 3D-Bilddaten eines Schädels, welche eine 2D-Überblicksdarstellung bestimmter Teile des Schädels zulassen, welche dem behandelnden Arzt oder der befundenden Person eine besonders rasche Diagnose ermöglicht. Der erforderliche Rechen- und Kostenaufwand soll möglichst klein sein. Nachteile des Standes der Technik sollen vermieden oder zumindest reduziert werden.
Gelöst wird diese Aufgabe durch ein oben genanntes Verfahren, bei dem die Schädeloberfläche derart ermittelt wird, indem ein virtuelles, ebenes Netz mit einer bestimmten Anzahl an Knotenpunkten mit einer bestimmten Maschenweite zueinander entlang einer senkrecht zum Netz stehenden Achse über den Schädel geführt wird, indem das virtuelle, ebene Netz zyklisch um einen Bildpunkt auf den Schädel abgesenkt wird, und den Knotenpunkten des Netzes jeweils jene Position der Achse zugeordnet wird, welche erreicht wird, wenn die 3D-Bilddaten an dem Knotenpunkt einen vorgegebenen Schwellwert erreichen oder überschreiten, die ermittelte Schädeloberfläche geglättet wird, und danach zur Auffaltung des Schädels in eine Ebene zwischen jeweils drei benachbarte Knotenpunkten des am Schädel angeordneten virtuellen Netzes jeweils ein Dreieck gebildet wird, der Normalvektor auf jedes Dreieck gebildet wird und von der ermittelten Schädeloberfläche ins Innere des Schädels alle 3D-Bilddaten entlang paralleler Geraden auf jeden Normalvektor in einem ausgewählten Längenbereich bis zum definierten Abstand von der Schädeloberfläche erfasst und daraus Zielwerte berechnet und gespeichert werden, und die den Knotenpunkten des Virtuellen ebenen Netzes zugeordneten Zielwerte als 2D-Bilddaten in einer Ebene dargestellt werden. Erfindungsgemäß wird aus den 3D-Bilddaten des Schädels, welche zuvor beispielsweise mit einem Computertomographen aufgenommen wurden, die Schädeloberfläche ermittelt und die Bilddaten in einem definierten Abstand zur Schädeloberfläche aus den 3D-Bilddaten ermittelt und in einer Ebene, beispielsweise an einem Bildschirm, dargestellt. Der Schädel wird quasi aufgefaltet und die Bilddaten der für den Arzt bzw. die befundende Person wesentlichen Regionen der Schädelkalotte in einer Ebene dargestellt. Insbesondere für die Frakturdiagnostik kann auf diese Weise eine wesentliche Unterstützung für den behandelnden Arzt oder die befundende Person geboten werden. Zur Ermittlung der Schädeloberfläche wird das virtuelle, ursprünglich ebene Netz quasi über den Schädel gelegt und die entsprechenden Bilddaten in jedem Knotenpunkt des Netzes zusammen mit der räumlichen Information im Koordinatensystem ermittelt und für die nachfolgende Darstellung in einer Ebene gespeichert. Das ursprünglich ebene Netz entspricht Bildpunkt für Bildpunkt der Anzeige bzw. dem Bildschirm, an der die zweidimensionale Rekonstruktion des Schädels abgebildet wird. Vorzugsweise werden sowohl die ursprüngliche Position aller Knotenpunkte des Netzes als auch die Position aller Knotenpunkte nach Anpassung an die Schädeldecke gespeichert. Dadurch kann durch einfache Transformation bzw. Verzerrung entlang der Knotenpunkte die Volumsinformation, z.B. die Dichte, aus der segmentierten Schicht aus den 3D-Bilddaten den 2D-Bilddaten, also der Ansichtsebene, zugeordnet werden.

Durch die Glättung der ermittelten Schädeloberfläche können beispielsweise durch medizinische Apparaturen, wie Schläuche, Kabel und Beatmungsgeräte, auftretende Artefakte reduziert oder eliminiert werden. Die Glättung kann nach verschiedenen Algorithmen, die beispielsweise die Raumkoordinaten in Form einer Schleife durchlaufen, vorgenommen werden. Das Glättungsergebnis kann verbessert werden, indem die Schleife häufig, beispielsweise bis zu 100-mal, durchlaufen wird.

Es ist vorgesehen, dass zwischen jeweils drei benachbarten Knotenpunkten des virtuellen Netzes jeweils ein Dreieck gebildet wird, der Normalvektor auf jedes Dreieck gebildet wird und von der ermittelten Schädeloberfläche ins Innere des Schädels alle 3D-Bilddaten entlang paralleler Geraden zu jedem Normalvektor in einem ausgewählten Längenbereich bis zum definierten Abstand von der Schädeloberfläche erfasst und daraus Zielwerte berechnet und gespeichert werden. Dies kann durch einfache Transformation bzw. Verzerrung für jeden Punkt des Dreiecks entlang zum Normalvektor auf das Dreieck paralleler Geraden durchgeführt werden, so dass die Matrix der Rekonstruktion ohne Begrenzungen ist. Durch diese Verfahrensmerkmale erfolgt somit eine Segmentierung der Schädeloberfläche und die Bildung einer, je nach Maschenweite des virtuellen Netzes, bestimmten Anzahl von Vektoren, welche normal zur Schädeloberfläche ins Innere des Schädels weisen. Entlang paralleler Geraden zu jedem Normalvektor jedes Dreiecks werden die 3D-Bilddaten in einem ausgewählten Längenbereich bis zum definierten Abstand von der Oberfläche erfasst und daraus entsprechende Zielwerte auf jeder Geraden berechnet, gespeichert und schließlich in einer Ebene als 2D-Bilddaten dargestellt.

Die den Knotenpunkten des virtuellen, ebenen Netzes zugeordneten Bilddaten der 3D-Bilddaten werden schlussendlich als 2D-Bilddaten in einer Ebene auf einer entsprechenden Anzeige dargestellt. Diese Darstellung des aufgefalteten Schädels ermöglicht dem behandelnden Arzt bzw. der befundenden Person eine rasche Diagnose.

Alle anderen Strukturen, wie zum Beispiel Gefäßkanäle und Unebenheiten an der Innenseite der Schädelkalotte (Impressiones digitatae), können durch das Verfahren entfernt und daher auch nicht mehr als Frakturen fehlinterpretiert werden. Das Resultat ist ein Bild der Schädelkalotte oder der Schädelbasis, welches es dem Radiologen oder der befundenden Person erlaubt, in Sekunden Frakturen zu erfassen. Die Detektionsrate der Frakturen wird im Vergleich zu den axialen Rohbildern gemäß der gängigen Praxis deutlich erhöht. Zusätzlich müssen durch dieses Verfahren auch nicht so hohe Maßstäbe an die notwendige Erfahrung des medizinischen Personals zur schnellen und sicheren Erkennung, beispielsweise von Frakturen, gesetzt werden.

Zusätzlich ermöglicht das Verfahren auch die Darstellung anderer krankhafter Veränderungen des Schädels, wie zum Beispiel eine perfekte Visualisierung der Schädelnähte. Ein vorzeitiger Schluss einer Naht in der Schädeldecke kann zu einer dauerhaften Deformierung des Schädels (Turm- oder Kahnschädel) führen, daher ist eine rechtzeitige Diagnose essentiell. Eine vollständige Auffaltung des Schädels gemäß der vorliegenden Erfindung führt zu einer Erleichterung der operativen Planung und zu einer Verbesserung des Therapie-Monitorings.

Weiters wird die Computertomographie auch für onkologische Patienten zur Darstellung von Hirnmetastasen eingesetzt. Die Schädelkalotte, in der ebenfalls Metastasen vorkommen können, wird dabei oft nicht beachtet, da hier wiederum viel Zeit zur Befundung aufgewendet werden muss. Dadurch können osteolytische oder osteoplastische Metastasen übersehen werden. Mit dem erfindungsgemäßen Verfahren kann auch auf diesem Gebiet die Detektion derartiger Veränderungen verbessert werden, der Fokus bzw. die darzustellende Ebene liegt hierbei zwischen der äußeren und der inneren Schädelkalottenschicht, dem sogenannten Diploe.

Schließlich eignet sich das gegenständliche Bildverarbeitungsverfahren auch zur Darstellung und Diagnose von Veränderungen innerhalb der Schädelkalotte, insbesondere zur einfachen und schnellen Darstellung von Blutungen bei Schlaganfallpatienten.

Als Achse, entlang welcher das virtuelle, ebene Netz über den Schädel geführt wird, kann vorzugsweise eine zentrale Achse durch den Schädel ermittelt werden. Dadurch wird gewährleistet, dass die Darstellung der 2D-Bilddaten in einer Ebene zentriert erfolgt.

Gemäß einem weiteren Merkmal der Erfindung ist vorgesehen, dass die zentrale Achse durch den Schädel dadurch ermittelt wird, dass zwei vorzugsweise im rechten Winkel zueinander angeordnete Paare paralleler, virtueller Ebenen gebildet werden, die Ebenen jedes Paares von einer Lage beiderseits des Schädels zueinander bewegt werden, äußere virtuelle Grenzebenen festgelegt werden, sobald die 3D-Bilddaten in diesen virtuellen Grenzebenen einen vorgegebenen Schwellwert erreichen, und die zentrale Achse als Schnittachse der zwischen den parallelen Grenzebenen angeordneten Mittelebenen festgelegt wird. Bei dieser Verfahrensvariante werden also virtuelle Ebenen in Richtung des Schädels bewegt. Sobald die 3D-Bilddaten einen vorgegebenen Schwellwert, beispielsweise einen Dichtewert in Hounsfield Units (HU) überschreiten, kommen die Ebenen zum Stillstand und definieren somit die jeweiligen Grenzebenen. Der Schädel wird von den virtuellen Grenzebenen quasi eingespannt und dadurch die zentrale Achse definiert.

Wie bereits oben erwähnt, kann als vorgegebener Schwellwert der 3D-Bilddaten ein vorgegebener Dichtewert, vorzugsweise ein bestimmter Wert der Hounsfield-Einheit (HU) verwendet werden. Die Hounsfield-Einheit wird in der Computertomographie für die Definition der Absorption im Gewebe verwendet.

Als Zielwert kann dabei jener Wert der 3D-Bilddaten im ausgewählten Längenbereich entlang jeder Geraden berechnet und gespeichert werden, dessen Dichtewert maximal ist. Nach dieser sogenannten Maximum Intensity Projection (MIP)-Methode werden die 3D-Bilddaten mit maximaler Intensität entlang des ausgewählten Längenbereichs ausgewertet. Diese Methode ist insbesondere für die Frakturdiagnostik am geeignetsten.

Gemäß einer alternativen Verfahrensmethode kann als Zielwert auch jener Wert der 3D-Bilddaten im ausgewählten Längenbereich entlang jeder Geraden berechnet und gespeichert werden, dessen Dichtewert minimal ist. Nach dieser sogenannten Minimum Intensity Projection-Methode werden entlang des ausgewählten Längenbereichs nur jene 3D-Bilddaten herangezogen, deren Intensität bzw. Dichtewert minimal ist. Diese Art der Zielwertberechnung eignet sich beispielsweise zur Darstellung von Metastasen in der Schädeldecke besonders.

Schließlich kann es für verschiedene Anwendungsgebiete auch von Vorteil sein, als Zielwert den Mittelwert der im ausgewählten Längenbereich entlang jeder Geraden bis zum definierten Abstand von der Schädeloberfläche erfassten 3D-Bilddaten zu berechnen und zu speichern. Auf diese Weise werden die 3D-Bilddaten über eine ausgewählte Dicke gemittelt und angezeigt, wodurch beispielsweise in der Frakturdiagnose ein rascheres und sichereres Ergebnis erzielt werden kann.

Neben den oben beschriebenen Verfahren zur Berechnung der Zielwerte können auch komplexere Such- und Findungsalgorithmen für die Zielwerte entlang jeder einzelnen Gerade angewendet werden. Insbesondere für die Frakturdarstellung ist es sinnvoll, dass die Geraden von Außen nach Innen kommend 3D-Bildpunkt für 3D-Bildpunkt abgetastet werden, bis ein gewisser Schwellwert, z.B. 1500 HU, erreicht wird. Zur alleinigen Darstellung der Tabula externa des Schädels werden dann ab dem Schwellwert nur die anschließenden fünf Bildpunkte für eine Maximum Intensity Projektion verwendet und somit nur die Tabula externa abgebildet.

Alternativ dazu kann auch jede Gerade von einem definierten Abstand von der Schädeloberfläche aus kommend nach außen verlaufend 3D-Bildpunkt für 3D-Bildpunkt abgetastet werden, bis ein vorgegebener Schwellwert, wie z.B. 1500 HU, erreicht wird. Danach wird die Abtastrichtung entlang der Geraden wieder geändert und vom 3D-Bildpunkt, welcher den Schwellwert erreicht hat, eine vorgegebene Anzahl von Pixel, z.B. 10 bis 80, zur Maximum Intensity Projektion zur Berechnung des Zielwerts herangezogen. Durch diese Methode können Blutungen sowohl subdural, subarachnoidal also auch epidurale Blutungen des gesamten Schädels entlang einer einzigen Schicht dargestellt werden. Alternativ dazu kann die Zielwertberechnung auch mit einer Minimum Intensity Projektion durchgeführt werden, wodurch Schlaganfälle in einem einzigen Bild visualisiert werden können.

Vor der Darstellung der 2D-Bilddaten können diese auch nach verschiedenen Methoden, beispielsweise durch gleitende Mittelwertbildung der Dichtewerte oder dgl., geglättet werden.

Wenn gemäß einem weiteren Merkmal der Erfindung entsprechende Bilddaten aus den 3D-Bilddaten des Schädels in mehreren Abständen zur Schädeloberfläche ermittelt werden und die ermittelten Bilddaten der verschiedenen Abstände zur Schädeloberfläche zeitlich hintereinander als 2D-Bilddaten in einer Ebene dargestellt werden, kann dem Betrachter der 2D-Bilddaten ein rascher Überblick über die Situation des Schädels in unterschiedlichen Tiefen von der Schädeloberfläche geboten werden. Durch Abspielen einer solchen Filmsequenz wird auch weniger gut ausgebildetem klinischen Personal in kürzester Zeit ein optimaler Überblick geboten.

Insbesondere für eine verbesserte Frakturdarstellung ist es von Vorteil, wenn die Bilddaten in Abständen von 0 bis 5 mm, insbesondere 0 bis 3 mm von der Schädeloberfläche, also insbesondere dem Bereich der Tabula externa des Schädels ermittelt werden.

Bei der Ermittlung der Bilddaten für eine verbesserte Frakturdarstellung wird ein ausgewählter Längenbereich von vorzugsweise 1 bis 3 mm erfasst.

Für die Darstellung von Blutungen innerhalb des Schädels ist ein ausgewählter Längenbereich von 10 bis 30 mm ideal.

Für die Schlaganfalldarstellung eignet sich ein ausgewählter Längenbereich von 10 bis 60 mm besonders.

Die 3D-Bilddaten des Schädels liegen vorzugsweise mit einer Schichtdicke zwischen 0,6 und 1,5 mm vor. Diese Schichtdicke wird zur optimalen Rekonstruktion empfohlen. Auch ein sehr geringes Rekonstruktionsintervall von beispielsweise 0,4 bis 1 mm ist von Vorteil.

Gelöst wird die erfindungsgemäße Aufgabe auch durch eine Vorrichtung zur Durchführung des Verfahrens zur Verarbeitung von 3D-Bilddaten eines Schädels, welche vorzugsweise durch einen entsprechenden Rechner, der mit den 3D-Bilddaten gespeist wird, gebildet sein kann. Aufgrund der Einfachheit des vorliegenden Bildverarbeitungsverfahrens kann das Verfahren auch auf einem herkömmlichen Personalcomputer bzw. Notebook in kürzester Zeit durchgeführt werden, ohne die Notwendigkeit einer Workstation mit entsprechend hoher Rechenleistung.

Die vorliegende Erfindung wird anhand der beigefügten Zeichnungen, welche verschiedene Schritte des erfindungsgemäßen Verfahrens zeigen, näher erläutert.

Darin zeigen
Fig. 1 die Draufsicht auf ein Schädel-CT zur Veranschaulichung der Ermittlung der zentralen Achse durch den Schädel;
Fig. 2 eine Prinzipskizze eines Schädels mit darüber angeordnetem virtuellen, ebenen Netz zur Bestimmung der Schädeloberfläche;
Fig. 3a bis 3c verschiedene Schritte bei der Ermittlung der Schädeloberfläche mit Hilfe eines virtuellen, ebenen Netzes, welches über den Schädel gelegt wird;
Fig. 4 eine Prinzipskizze zur Veranschaulichung eines Glättungsalgorithmus;
Fig. 5a und 5b Ansichten eines Teils der Schädelkalotte zur Erklärung des erfindungsgemäßen Bildverarbeitungsverfahrens;
Fig. 6 ein resultierendes Bild eines aufgefalteten Schädels mit einer Fraktur;
Fig. 7 ein zweidimensionales Bild einer aufgefalteten Schädelbasis;
Fig. 8 ein weiteres Bild eines aufgefalteten Schädels eines Probanden zur Veranschaulichung der Schädelnähte; und
Fig. 9 ein Bild eines Teils eines aufgefalteten Schädels im inneren Bereich zur Darstellung von Blutungen.

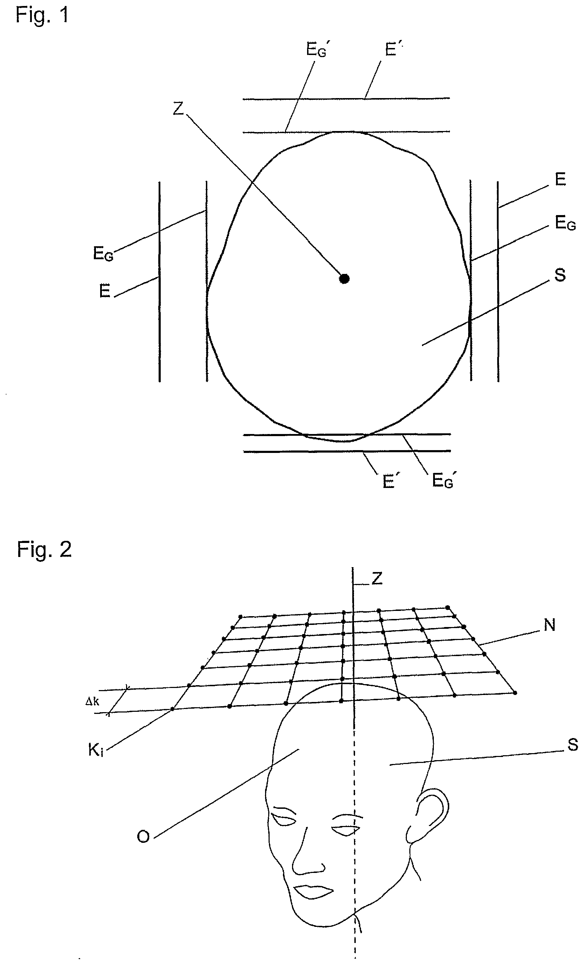

Fig. 1 zeigt ein Bild eines menschlichen Schädels S von oben betrachtet, welches beispielsweise mit einem Computertomographen aufgenommen wurde. Die Darstellungsmethode ist beispielsweise eine Maximum Intensity Projektion aller CT-Bilder des Schädels S, wodurch im Wesentlichen nur die knöcherne Struktur sichtbar ist. Zur Bestimmung einer zentralen Achse Z durch den Schädel S werden zwei vorzugsweise im rechten Winkel zueinander angeordnete Paare paralleler, virtueller Ebenen E, E' gebildet und die Ebenen E, E' jedes Paares von einer Lage beiderseits des Schädels S zueinander bewegt. Sobald die 3D-Bilddaten des Schädels S einen vorgegebenen Schwellwert, beispielsweise einen vorgegebenen Dichtewert in Hounsfield-Einheiten (HU), erreichen bzw. überschreiten, kommt die Ebene E bzw. E' als sogenannte Grenzebene E_{G} bzw. E_{G}' zum Stillstand. Letztlich ist der Schädel S zwischen den parallelen Grenzebenen E_{G} und E_{G}' quasi eingespannt. Die Schnittachse der zwischen den parallelen Grenzebenen E_{G}, E_{G}' angeordneten Mittelebenen wird nunmehr als zentrale Achse Z durch den Schädel S definiert.

Gemäß Fig. 2 wird nun zur Bestimmung der Schädeloberfläche O ein virtuelles, ebenes Netz N mit einer bestimmten Anzahl an Knotenpunkten Kᵢ, welche der Maschenweite Δk entsprechend voneinander entfernt sind, aufgespannt. Das virtuelle, ebene Netz N wird senkrecht zur zentralen Achse Z positioniert und entlang dieser über den Schädel S geführt. Die Anzahl der Knotenpunkt Kᵢ, die Dimension der Maschenweite Δk, und die Größe des Netzes N ist variabel und kann vorzugsweise in bestimmten Grenzen frei gewählt werden. Das virtuelle, ursprünglich ebene Netz N entspricht letztlich der Abbildungsebene der 2D-Bilddaten des Schädels S. Sämtliche Knotenpunkte Kᵢ werden im dreidimensionalen Raum gespeichert, wobei einerseits die ursprüngliche Position des Netzes N und andererseits die Endposition an der Schädeloberfläche O gespeichert werden. Zur Bestimmung der Schädeloberfläche O wird das Netz N, und zwar jeder einzelne Knotenpunkt Kᵢ des Netzes N, zyklisch um einen Bildpunkt auf den Schädel S abgesenkt. Bei jedem Zyklus wird geprüft, ob die 3D-Bilddaten im jeweiligen Knotenpunkt Kᵢ einen vorgegebenen Schwellwert, beispielsweise einen Dichtewert zwischen 130 und 1500 HU, erreicht haben. Wenn der vorgegebene Schwellwert erreicht oder überschritten ist, werden diesem Knotenpunkt Kᵢ, der zusammen mit den Koordinaten abgespeichert wurde, die entsprechenden Bilddaten zugeordnet. Der Knotenpunkt Kᵢ wird dann festgehalten und beim nächsten Zyklus nicht mehr abgesenkt. Um ein Dehnen des Netzes N beim weiteren Absenken auf den Schädel S zu vermeiden, wird nach jedem Zyklus der Abstand aller Knotenpunkte Kᵢ zueinander durch Vektorrechnung bestimmt und es werden die äußeren Punkte soweit nach innen gerückt, dass die Maschenweite Δk zwischen den Knotenpunkten Kᵢ im 3D-Raum konstant bleibt und der ursprünglich gewünschten Maschenweite Δk entspricht. Das virtuelle Netz N legt sich somit wie ein physikalisch echtes Netz über den Schädel S. Auf diese Weise kann die Schädeloberfläche O in geeigneter Weise bestimmt werden.

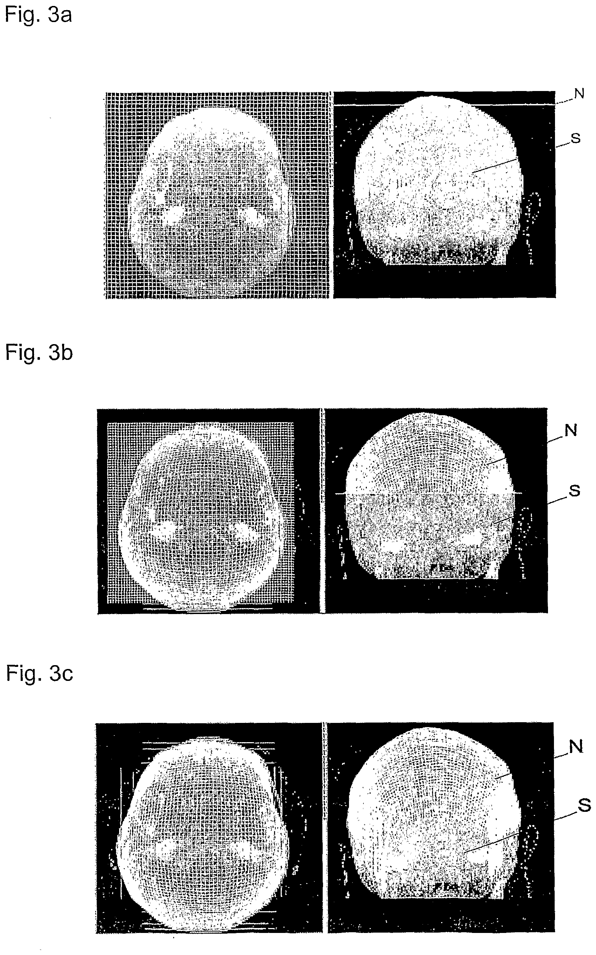

Die Fig. 3a bis 3c zeigen dieses Verfahren der Bestimmung der Schädeloberfläche O in drei verschiedenen Verfahrensstadien. Dabei wird, wie oben beschrieben, das virtuelle, ursprünglich ebene Netz N über den Schädel S abgesenkt und es werden die Knotenpunkte Kᵢ des Netzes N dann fixiert, wenn die zugehörigen 3D-Bilddaten einen vorgegebenen Schwellwert erreichen bzw. überschreiten.

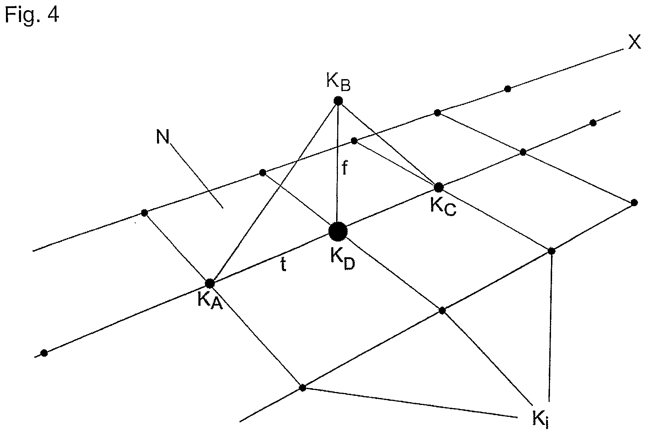

Das an der Schädeloberfläche O befindliche Netz N kann nunmehr geglättet werden, da die Schädeloberfläche O oft nicht vollständig glatt ist und beispielsweise durch medizinische Apparaturen, wie Schläuche, Kabel und Beatmungsgerät, Artefakte hervorgerufen werden können. Der Glättungsalgorithmus kann beispielsweise in Form einer Schleife sämtliche Koordinaten im dreidimensionalen Raum durchlaufen, wie anhand der Skizze gemäß Fig. 4 beispielhaft gezeigt wird. Dementsprechend wird zuerst in der Achse x der Knotenpunkt K_{A} und der übernächste Knotenpunkt K_{C} definiert und dazwischen eine Gerade t gezogen. Zwischen den Knotenpunkten K_{A} und K_{C} wird der Knotenpunkt K_{D} errechnet. Der Abstand f zwischen dem berechneten Knotenpunkt K_{D} und dem tatsächlichen Punkt K_{B} wird gemäß dem Glättungsalgorithmus um ein Drittel der Distanz f an den ursprünglich berechneten Knotenpunkt K_{D} angenähert. Dieser Vorgang kann mehrmals, z.B. von 3- bis zu 200-mal, wiederholt werden, bis eine geglättete Oberfläche vorliegt. Ohne Glättung würden die Punkte, wie z.B. der Knotenpunkt K_{B}, zu einem Artefakt in der Darstellung führen.

Nachdem nun die Schädeloberfläche O mit Hilfe des virtuellen Netzes N gemäß den Fig. 2 und 3a bis 3c ermittelt und allenfalls geglättet (Fig. 4) wurde, beginnt die eigentliche Auffaltung des Schädels S in eine Ebene. Zu diesem Zweck wird das virtuelle, ebene Netz N auf Dreiecke D aufgeteilt und jedes gebildete Dreieck D einzeln abgearbeitet. Vor der Segmentierung entspricht jeder Knotenpunkt Kᵢ auf dem Netz auch einem Punkt in der 2D-Darstellung. Die ursprüngliche Position jedes Knotenpunktes Kᵢ vor der Segmentierung ist genauso wie die Position des Punktes nach der Segmentierung im dreidimensionalen Raum bekannt. Durch die Aufteilung in Dreiecke D kann durch einfache Vektorrechnung jeder beliebige Punkt auf diesen Flächen vor der Verformung des Netzes N auch den korrespondierenden Punkten nach der Verformung zugeordnet werden. Das ursprüngliche Netz N wird somit Dreieck D für Dreieck D und Punkt für Punkt durchgerechnet, so dass für alle 2D-Bilddaten, welche in einer Ebene dargestellt werden, der entsprechende Punkt an der Schädeloberfläche O im dreidimensionalen Raum der 3D-Bilddaten bzw. in einem definierten Abstand d zur Schädeloberfläche O ermittelt wird.

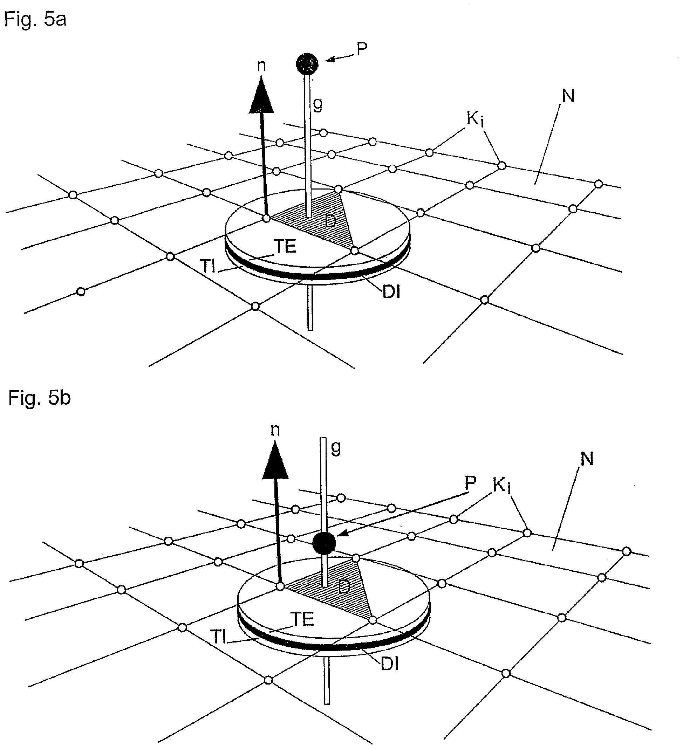

Zur Ermittlung des Inhalts der 2D-Bilddaten in jedem Knotenpunkt Kᵢ des virtuellen Netzes N können verschiedene Methoden herangezogen werden. Fig. 5a und 5b zeigen einen Teil des Schädels S mit daran angeordnetem Netz N. Zwischen drei Knotenpunkten Kᵢ des Netzes N wird ein Dreieck D gebildet und der Normalvektor n auf das Dreieck D berechnet. Entlang der zur Schädeloberfläche O normal stehenden zum Normalvektor n parallelen Geraden g werden nun alle Bilddaten von außen nach innen aus den 3D-Bilddaten in einem ausgewählten Längenbereich Δd bis zum definierten Abstand d von der Schädeloberfläche O ausgelesen. Aus den 3D-Bilddaten im ausgewählten Längenbereich Δd bis zum definierten Abstand d von der Schädeloberfläche O kann beispielsweise nach der MIP (Maximum Intensity Projection)-Methode einfach nur der Inhalt jener Bilddaten mit der maximalen Intensität herangezogen und als Zielwert gespeichert werden. An Stelle des MIP-Verfahrens kann auch der minimale Dichtewert der 3D-Bilddaten entlang der Geraden g oder auch ein Mittelwert im ausgewählten Längenbereich Δd entlang der Geraden g berechnet und gespeichert werden. Durch entsprechende Auswahl des ausgewählten Längenbereichs Δd können die Strukturen in bestimmten Tiefen des Schädels S, beispielsweise der Tabula externa TE der mittleren Schicht D, oder der Tabula interna TI dargestellt werden. Wenn alle Schichten (Tabula externa TE, mittlere Schicht D und Tabula interna TI) dargestellt werden, werden die feineren Konturen, die z.B. bei Frakturen auftreten, verwischt. Bei einer modifizierten MIP können nur die 3D-Bilddaten von der äußersten Schädelkalottenschicht Tabula externa zur Darstellung herangezogen werden. Dadurch ist eine schnelle und exakte Befundung von Frakturen möglich.

Für andere Anwendungen können auch die Bereiche innerhalb der Schädelkalotte, beispielsweise der Subarachnoidalraum, nach diesem Verfahren dargestellt werden sowie auch das innen an der Schädeldecke anliegende Gehirn. Zu diesem Zweck wird von einer bestimmten Distanz entlang der Geraden beispielsweise die Zielwertberechnung nach Außen entlang der Geraden g vorgenommen.

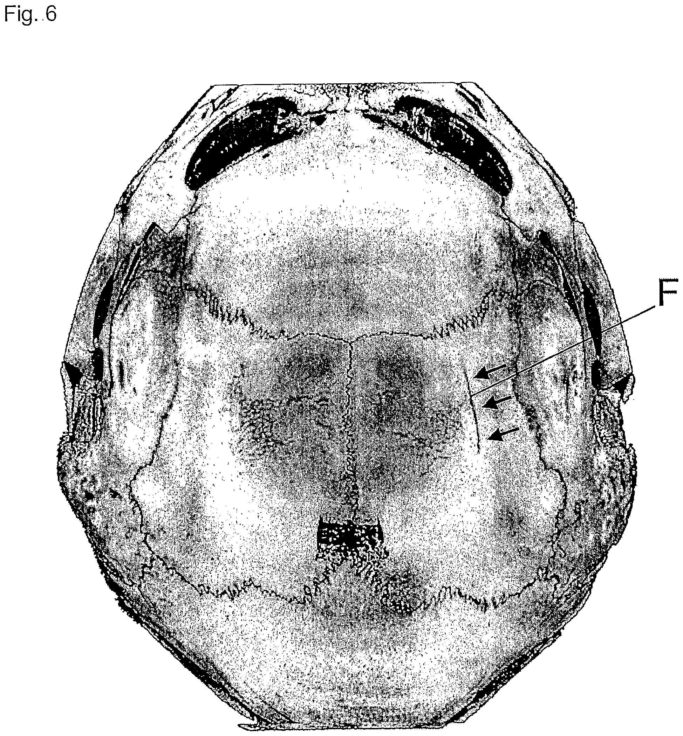

Fig. 6 zeigt ein Beispiel der Erstellung eines aufgefalteten Schädels S mit einer Fraktur F im Scheitelbeinbereich.

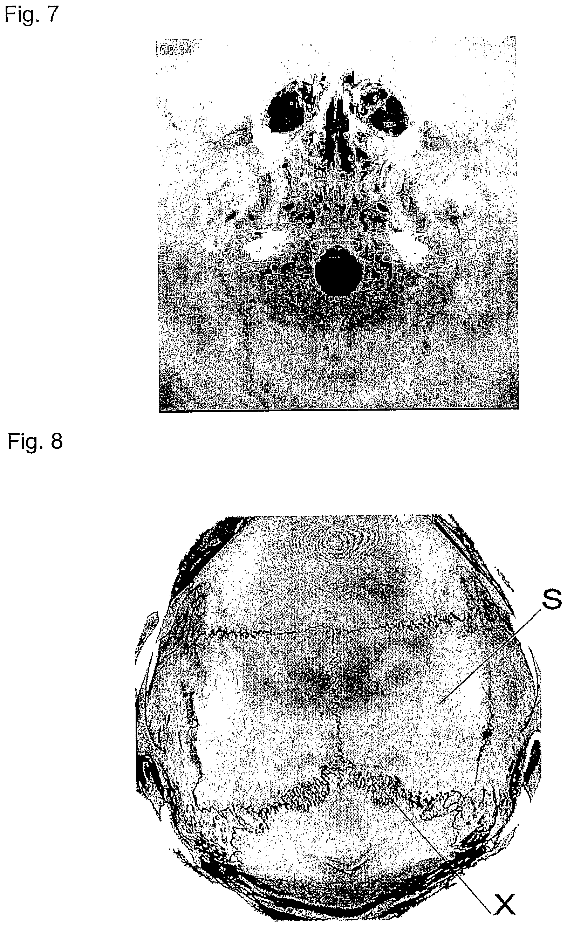

Fig. 7 zeigt eine gemäß dem erfindungsgemäßen Verfahren aufgefaltete Schädelbasis ohne Frakturen. Bei der Darstellung der Schädelbasis werden die 3D-Bilddaten des Schädels quasi umgedreht und das virtuelle Netz von der Wirbelsäule her über den gedrehten Schädel abgesenkt. Zur Reduktion der Artefakte erfolgt vorzugsweise eine Vielzahl von Glättungsvorgängen, beispielsweise 20 bis 30 Durchläufe, bevor die aufgefaltete Schädelbasis dargestellt wird.

Fig. 8 zeigt die Abbildung eines nach dem erfindungsgemäßen Verfahren aufgefalteten Schädels S eines jungen, gesunden Probanden. Dabei sind die Schädelnähte X deutlich erkennbar. Eine pathologische Veränderung der Schädelnähte, wie z.B. ein vorzeitiger Schluss derselben, könnte mit Hilfe einer solchen Darstellung rechtzeitig erkannt und durch entsprechende Maßnahmen eine dauerhafte Deformierung des Schädels verhindert werden.

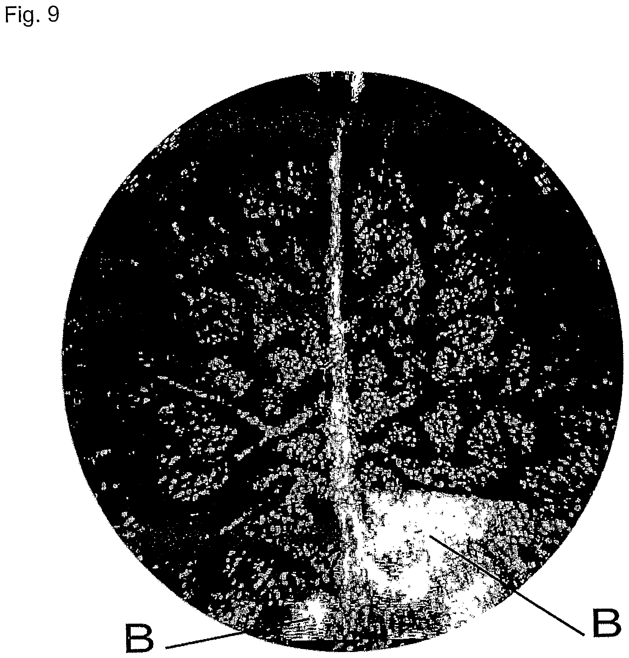

Fig. 9 zeigt schließlich eine Darstellung eines aufgefalteten Schädels, wobei epidurale Blutungen B erkennbar sind.

Ebenso kann das erfindungsgemäße Verfahren zur raschen und einfachen Diagnose von Veränderungen innerhalb der Schädelkalotte angewendet werden und so einfach und schnell Blutungen und Schlaganfälle dargestellt werden.

## Patentansprüche

1. Computer-implementiertes Verfahren zur Verarbeitung von 3D-Bilddaten eines Schädels (S), wobei Bilddaten aus den 3D-Bilddaten ausgewählt bzw. berechnet und als 2D-Bilddaten in einer Ebene dargestellt werden, aus den 3D-Bilddaten die Schädeloberfläche (O) ermittelt wird, und die entsprechenden Bilddaten in einem definierten Abstand (d) zur Schädeloberfläche (O) ermittelt und als 2D-Bilddaten in einer Ebene dargestellt werden, **dadurch gekennzeichnet, dass** die Schädeloberfläche (O) ermittelt wird, indem ein virtuelles, ebenes Netz (N) mit einer bestimmten Anzahl an Knotenpunkten (Kᵢ) mit einer bestimmten Maschenweite (Δk) zueinander entlang einer senkrecht zum Netz (N) stehenden Achse über den Schädel (S) geführt wird, indem das virtuelle, ebene Netz (N) zyklisch um einen Bildpunkt auf den Schädel (S) abgesenkt wird, und den Knotenpunkten (Kᵢ) des Netzes (N) jeweils jene Position (zᵢ) der Achse zugeordnet wird, welche erreicht wird, wenn die 3D-Bilddaten an dem Knotenpunkt (Kᵢ) einen vorgegebenen Schwellwert erreichen oder überschreiten, die ermittelte Schädeloberfläche (O) geglättet wird, und dass danach zur Auffaltung des Schädels (S) in eine Ebene zwischen jeweils drei benachbarten Knotenpunkten (Kᵢ) des am Schädel (S) angeordneten virtuellen Netzes (N) jeweils ein Dreieck (D) gebildet wird, der Normalvektor (n) auf jedes Dreieck (D) gebildet wird und von der ermittelten Schädeloberfläche (O) ins Innere des Schädels (S) alle 3D-Bilddaten entlang paralleler Geraden (g) auf jeden Normalvektor (n) in einem ausgewählten Längenbereich (Δd) bis zum definierten Abstand (d) von der Schädeloberfläche (O) erfasst und daraus Zielwerte berechnet und gespeichert werden, und die den Knotenpunkten (Kᵢ) des virtuellen, ebenen Netzes (N) zugeordneten Zielwerte als 2D-Bilddaten in einer Ebene dargestellt werden.

2. Bildverarbeitungsverfahren nach Anspruch 1, **dadurch gekennzeichnet, dass** als Achse eine zentrale Achse (Z) durch den Schädel (S) ermittelt wird.

3. Bildverarbeitungsverfahren nach Anspruch 2, **dadurch gekennzeichnet, dass** die zentrale Achse (Z) durch den Schädel (S) dadurch ermittelt wird, dass zwei vorzugsweise im rechten Winkel zueinander angeordnete Paare paralleler, virtueller Ebenen (E, E') gebildet werden, die Ebenen (E, E') jedes Paares von einer Lage beiderseits des Schädels (S) zueinander bewegt werden, äußere, virtuelle Grenzebenen (E_{G}, E_{G}') festgelegt werden, sobald die 3D-Bilddaten in diesen virtuellen Grenzebenen (E_{G}, E_{G}') einen vorgegebenen Schwellwert erreichen, und die zentrale Achse (Z) als Schnittachse der zwischen den parallelen Grenzebenen (E_{G}, E_{G}') angeordneten Mittelebenen festgelegt wird.

4. Bildverarbeitungsverfahren nach einem der Ansprüche 1 bis 3, **dadurch gekennzeichnet, dass** als vorgegebener Schwellwert der 3D-Bilddaten ein vorgegebener Dichtewert, vorzugsweise ein bestimmter Wert einer Hounsfield-Einheit, verwendet wird.

5. Bildverarbeitungsverfahren nach einem der Ansprüche 1 bis 4, **dadurch gekennzeichnet, dass** als Zielwert jener Wert der 3D-Bilddaten im ausgewählten Längenbereich (Δd) entlang jeder Geraden (g) berechnet und gespeichert wird, dessen Dichtewert maximal ist.

6. Bildverarbeitungsverfahren nach einem der Ansprüche 1 bis 4, **dadurch gekennzeichnet, dass** als Zielwert jener Wert der 3D-Bilddaten im ausgewählten Längenbereich (Δd) entlang jeder Geraden (g) berechnet und gespeichert wird, dessen Dichtewert minimal ist.

7. Bildverarbeitungsverfahren nach einem der Ansprüche 1 bis 4, **dadurch gekennzeichnet, dass** als Zielwert der Mittelwert der im ausgewählten Längenbereich (Δd) entlang jeder Geraden (g) bis zum definierten Abstand (d) von der Schädeloberfläche (O) erfassten 3D-Bilddaten berechnet und gespeichert wird.

8. Bildverarbeitungsverfahren nach einem der Ansprüche 1 bis 7, **dadurch gekennzeichnet, dass** die 2D-Bilddaten vor der Darstellung geglättet werden.

9. Bildverarbeitungsverfahren nach Anspruch 8, **dadurch gekennzeichnet, dass** die 2D-Bilddaten durch gleitende Mittelwertbildung der Dichtewerte geglättet werden.

10. Bildverarbeitungsverfahren nach einem der Ansprüche 1 bis 9, **dadurch gekennzeichnet, dass** entsprechende Bilddaten aus den 3D-Bilddaten des Schädels (S) in mehreren Abständen (dᵢ) zur Schädeloberfläche (O) ermittelt werden, und die ermittelten Bilddaten der verschiedenen Abstände (dᵢ) zur Schädeloberfläche (O) zeitlich hintereinander als 2D-Bilddaten in einer Ebene dargestellt werden.

11. Bildverarbeitungsverfahren nach einem der Ansprüche 1 bis 10, **dadurch gekennzeichnet, dass** die Bilddaten in Abständen (d) von 0 bis 5 mm, insbesondere 0 bis 3 mm, von der Schädeloberfläche (O) ermittelt werden.

12. Bildverarbeitungsverfahren nach einem der Ansprüche 1 bis 11, **dadurch gekennzeichnet, dass** die Bilddaten über einen Längenbereich (Δd) von 1 bis 3 mm erfasst werden.

13. Bildverarbeitungsverfahren nach einem der Ansprüche 1 bis 11, **dadurch gekennzeichnet, dass** die Bilddaten über einen Längenbereich (Δd) von 10 bis 30 mm erfasst werden.

14. Bildverarbeitungsverfahren nach einem der Ansprüche 1 bis 11, **dadurch gekennzeichnet, dass** die Bilddaten über einen Längenbereich (Δd) von 10 bis 60 mm erfasst werden.

15. Bildverarbeitungsverfahren nach einem der Ansprüche 1 bis 14, **dadurch gekennzeichnet, dass** 3D-Bilddaten des Schädels (S) mit einer Schichtdicke zwischen 0,6 und 1,5 mm verwendet werden.

16. Vorrichtung zur Durchführung eines Verfahrens zur Verarbeitung von 3D-Bilddaten eines Schädels (S) nach einem der Ansprüche 1 bis 15.

## Claims

1. Computer-implemented method for processing 3D image data of a skull (S), wherein image data is selected or calculated from the 3D image data and is represented as 2D image data in a plane, and the skull surface (O) is determined from the 3D image data, and the corresponding image data is determined at a defined distance (d) from the skull surface (O) and represented as 2D image data in a plane, **characterised in that** the skull surface (O) is determined by a virtual, flat grid (N) with a particular number of nodal points (Kᵢ) with a particular mesh size (Δk) with respect to one another being guided along an axis standing perpendicular to the grid (N) over the skull (S), by the virtual, flat grid (N) being lowered onto the skull (S) by a pixel cyclically, and the nodal points (Kᵢ) of the grid (N) are in each case assigned that position (zᵢ) of the axis, which is reached when the 3D image data at the nodal point (Kᵢ) reaches or exceeds a predefined threshold value, the determined skull surface (O) is smoothed, and that subsequently, to unfold the skull (S) into a plane between in each case three adjacent nodal points (Kᵢ) of the virtual grid (N) arranged on the skull (S), a triangle (D) is formed in each case, the normal vector (n) is formed on each triangle (D) and from the determined skull surface (O) into the interior of the skull (S) all 3D image data along parallel straight lines (g) on each normal vector (n) is captured in a selected length region (Δd) up to the defined distance (d) from the skull surface (O) and target values are calculated and saved therefrom, and the target values assigned to the nodal points (Kᵢ) of the virtual, flat grid (N) are represented as 2D image data in a plane.

2. Image processing method according to claim 1, **characterised in that** a central axis (Z) through the skull (S) is determined as the axis.

3. Image processing method according to claim 2, **characterised in that** the central axis (Z) through the skull (S) is determined such that two pairs of parallel, virtual planes (E, E'), preferably arranged at right angles to one another, are formed, the planes (E, E') of each pair are moved with respect to one another from a position on both sides of the skull (S), exterior, virtual boundary planes (E_{G}, E_{G}') are set, once the 3D image data in said virtual boundary planes (E_{G}, E_{G}') reaches a predefined threshold value, and the central axis (Z) is set as the cutaway axis of the median planes arranged between the parallel boundary planes (E_{G}, E_{G}').

4. Image processing method according to one of claims 1 to 3, **characterised in that** a predefined density value, preferably a particular value of a Hounsfield unit, is used as the predefined threshold value of the 3D image data.

5. Image processing method according to one of claims 1 to 4, **characterised in that** calculated and saved as the target value is that value of the 3D image data in the selected length region (Δd) along each straight line (g), the density value thereof is at a maximum.

6. Image processing method according to one of claims 1 to 4, **characterised in that** calculated and saved as the target value is that value of the 3D image data in the selected length region (Δd) along each straight line (g), the density value thereof is at a minimum.

7. Image processing method according to one of claims 1 to 4, **characterised in that** calculated and saved as the target value is the average of the 3D image data captured in the selected length region (Δd) along each straight line (g) up to the defined distance (d) from the skull surface (O).

8. Image processing method according to one of claims 1 to 7, **characterised in that** the 2D image data is smoothed prior to the representation.

9. Image processing method according to claim 8, **characterised in that** the 2D image data is smoothed by forming the rolling average of the density values.

10. Image processing method according to one of claims 1 to 9, **characterised in that** corresponding image data from the 3D image data of the skull (S) is determined in a plurality of distances (dᵢ) from the skull surface (O), and the determined image data of the various distances (dᵢ) from the skull surface (O) are represented in a plane as 2D image data chronologically in succession.

11. Image processing method according to one of claims 1 to 10, **characterised in that** the image data is determined at distances (d) from 0 to 5 mm, in particular 0 to 3 mm, from the skull surface (O).

12. Image processing method according to one of claims 1 to 11, **characterised in that** the image data is captured over a length region (Δd) from 1 to 3 mm.

13. Image processing method according to one of claims 1 to 11, **characterised in that** the image data is captured over a length region (Δd) from 10 to 30 mm.

14. Image processing method according to one of claims 1 to 11, **characterised in that** the image data is captured over a length region (Δd) from 10 to 60 mm.

15. Image processing method according to one of claims 1 to 14, **characterised in that** 3D image data of the skull (S) with a slice thickness between 0.6 and 1.5 mm is used.

16. Apparatus for performing a method for processing 3D image data of a skull (S) according to one of claims 1 to 15.

## Revendications

1. Procédé mis en oeuvre par ordinateur de traitement de données d'image en 3D d'un crâne (S), dans lequel on sélectionne ou on calcule des données d'image parmi les données d'image en 3D et on les représente dans un plan sous la forme de données d'image en 2D, on détermine la surface (O) du crâne à partir des données d'image en 3D et on détermine les données d'image correspondantes à une distance (d) définie de la surface (O) du crâne et on les représente dans un plan sous la forme de données d'image en 2D, **caractérisé en ce que** l'on détermine la surface (O) du crâne en faisant passer au-dessus du crâne (S) un réseau (N) plan virtuel ayant un nombre déterminé de points (Kᵢ) nodaux à une largeur (Δk) de mailles déterminée les uns par rapport aux autres le long d'un axe perpendiculaire au réseau (N), en abaissant le réseau (N) plan virtuel cycliquement d'un point image sur le crâne (S), et en affectant aux points (Kᵢ) nodaux du réseau (N) respectivement chaque position (zᵢ) de l'axe, qui est atteinte, lorsque les données d'image en 3D sur le point (Kᵢ) nodal atteignent ou dépassent une valeur de seuil donnée à l'avance, en lissant la surface (O) de crâne déterminée, et **en ce que**, ensuite, pour déplier le crâne (S) dans un plan entre respectivement trois points (Kᵢ) nodaux voisins du réseau (N) virtuel disposés sur le crâne (S), on forme respectivement un triangle (D), on forme le vecteur (n) normal à chaque triangle (D) et, à partir de la surface (O) déterminée à l'intérieur du crâne (S), on détecte toutes les données d'image en 3D le long de droites (g) parallèles sur chaque vecteur (n) normal dans une région (Δd) longitudinale sélectionnée jusqu'à une distance (d) définie de la surface (O) du crâne et on en calcule et en mémorise des valeurs cibles et on représente, dans un plan sous forme de données d'image en 2D, les valeurs cibles associées aux points (Kᵢ) nodaux du réseau (N) plan virtuel.

2. Procédé de traitement d'image suivant la revendication 1, **caractérisé en ce que** l'on détermine comme axe un axe (Z) central passant dans le crâne (S).

3. Procédé de traitement d'image suivant la revendication 2, **caractérisé en ce que** l'on détermine l'axe (Z) central passant dans le crâne (S) en formant deux paires, disposés l'un par rapport à l'autre de préférence à angle droit, de plans (E, E') virtuels parallèles, en déplaçant les uns par rapport aux autres les plans (E, E') de chaque paire à partir d'une position des deux côtés du crâne (S), en fixant des plans (E_{G}, E_{G}') limites virtuels extérieurs, dès que les données d'image en 3D dans ces plans (E_{G}, E_{G}') limites virtuels atteignent une valeur de seuil donnée à l'avance et en fixant l'axe (Z) central comme axe d'intersection des plans médians disposés entre les plans (E_{G}, E_{G}') limites parallèles.

4. Procédé de traitement d'image suivant l'une des revendications 1 à 3, **caractérisé en ce que** l'on utilise, comme valeur de seuil donnée à l'avance des données d'image en 3D, une valeur de densité donnée à l'avance, de préférence une valeur définie d'une unité de Hounsfield.

5. Procédé de traitement d'image suivant l'une des revendications 1 à 4, **caractérisé en ce que** l'on calcule et mémorise, comme valeur cible, la valeur des données d'image en 3D dans la région (Δd) longitudinale sélectionnée le long de chaque droite (g), dont la valeur de densité est maximale.

6. Procédé de traitement d'image suivant l'une des revendications 1 à 4, **caractérisé en ce que** l'on calcule et l'on mémorise, comme valeur cible, la valeur des données d'image en 3D dans la région (Δd) longitudinale sélectionnée le long de chaque droite (g), dont la valeur de densité est minimale.

7. Procédé de traitement d'image suivant l'une des revendications 1 à 4, **caractérisé en ce que** l'on calcule et l'on mémorise, comme valeur cible, la valeur moyenne des données d'image en 3D détectées dans la région (Δd) longitudinale sélectionnée le long de chaque droite (g) jusqu'à une distance (d) définie de la surface (O) du crâne.

8. Procédé de traitement d'image suivant l'une des revendications 1 à 7, **caractérisé en ce que** l'on lisse les données d'image en 2D avant la représentation.

9. Procédé de traitement d'image suivant la revendication 8, **caractérisé en ce que** l'on lisse les données d'image en 2D par formation d'une valeur moyenne mobile des valeurs de densité.

10. Procédé de traitement d'image suivant l'une des revendications 1 à 9, **caractérisé en ce que** l'on détermine des données d'image correspondantes à partir des données d'image en 3D du crâne (S) à plusieurs distances (dᵢ) de la surface (O) du crâne et on représente dans un plan sous forme de données d'image en 2D les unes derrière les autres dans le temps les données d'images déterminées des diverses distances (dᵢ) à la surface (O) du crâne.

11. Procédé de traitement d'image suivant l'une des revendications 1 à 10, **caractérisé en ce que** l'on détermine les données d'image à des distances (d) de 0 à 5 mm, notamment de 0 à 3 mm, de l la surface (O) du crâne.

12. Procédé de traitement d'image suivant l'une des revendications 1 à 11, **caractérisé en ce que** l'on détecte les données d'image sur une région (Δd) longitudinale de 1 à 3 mm.

13. Procédé de traitement d'image suivant l'une des revendications 1 à 11, **caractérisé en ce que** l'on détecte les données d'image sur une région (Δd) longitudinale de 10 à 30 mm.

14. Procédé de traitement d'image suivant l'une des revendications 1 à 11, **caractérisé en ce que** l'on détecte les données d'images sur une région (Δd) longitudinale de 10 à 60 mm.

15. Procédé de traitement d'image suivant l'une des revendications 1 à 14, **caractérisé en ce que** l'on utilise des données d'image en 3D du crâne (S) ayant une épaisseur de couche comprise entre 0,6 et 1,5 mm.

16. Dispositif pour effectuer un procédé de traitement de données d'image en 3D d'un crâne (S) suivant l'une des revendications 1 à 15.
